# DEMANDE DE BREVET EUROPEEN

(11) **EP 4 699 425 A1**
(43) Date de publication de la demande: **25.02.2026**
(21) Numéro de dépôt: 25187996.1
(22) Date de dépôt: 08.07.2025
(51) Int. Cl.: A01B 59/06, A01B 61/02, A01B 63/10, A01B 61/04

(54) **ATTELAGE TROIS POINTS AVEC AMORTISSEUR HYDRAULIQUE**

(30) Priorité: 20.08.2024 FR 2409009
(71) Demandeur: Noremat, 54710 Ludres (FR)
(72) Inventeur: GREIF, Pascal, 54360 DAMELEVIERES (FR); DREUX, Nicolas, 57155 MARLY (FR)
(74) Mandataire: Hugues, Catherine

(57) **Abrégé**

[La présente invention concerne un attelage trois points pour relier une machine (3) à un tracteur (5), comportant deux bras inférieurs (1) configurés pour être fixés par une fixation rigide en deux points dits inférieurs (2) de la machine (3), et par une liaison dite inférieure (4) articulée au tracteur (5), et un dispositif supérieur (6) configuré pour relier un troisième point (7) de la machine (3) disposé plus haut que les deux points dits inférieurs (2), à un point d'un dispositif de levage du tracteur (5). Ledit dispositif supérieur (6) de cet attelage comprend un amortisseur hydraulique (8) muni d'un vérin (9), configuré pour limiter les efforts transmis par le dispositif supérieur (6) au tracteur (5) au-delà d'un effort prédéterminé.]

## Description

La présente invention est dans le domaine des attelages de machines portées à des tracteurs. Elle concerne plus particulièrement un attelage trois points avec amortisseur hydraulique.

L'entretien des bords de route fait intervenir principalement des faucheuses débroussailleuses à bras articulé (FDBA) attelées sur des tracteurs agricoles. La multiplicité des chantiers ainsi que l'étendue du réseau routier impliquent de réaliser de grands déplacements inter chantiers. Pour cela la faucheuse est repliée derrière le tracteur et le tracteur peut ainsi être utilisé jusqu'à sa vitesse maximale de déplacement. La vitesse maximale a longtemps été de 40 km/h, mais certains tracteurs sont aujourd'hui capables de rouler jusque 60 km/h.

La plupart des attelages de machines se font par l'articulation de deux bras solidaires de la machine sur des axes fixés sur le tracteur aux environs de son essieu arrière. Un troisième point de la machine est relié à un dispositif de levage du tracteur, ce qui permet de maintenir, ou de lever ou faire descendre la machine.

Lors des phases de travail, cette liaison du troisième point est sollicitée de façon acceptable. En revanche en situation de transport, les efforts transmis par la machine au troisième point sont plus importants ; les accélérations verticales de la machine dues aux irrégularités de la route amplifient ces efforts, pouvant endommager la liaison, aussi bien côté machine que côté tracteur. Ce phénomène est amplifié par une vitesse de déplacement plus rapide, jusque 60 km/h.

Il existe plusieurs systèmes d'amortissement du troisième point d'un attelage trois points, pour notamment réduire les secousses subies par le conducteur, le tracteur, ou la machine.

D'autres solutions proposent un renforcement de l'attache du troisième point, pour supporter les crêtes d'effort, ou encore des dispositifs annexe de stabilisation de cette attache pour réduire les crêtes d'effort.

Néanmoins cela présente d'importants inconvénients, puisqu'elles ne protègent pas de manière satisfaisante.

Il existe donc un besoin d'une solution moins coûteuse d'une protection des tracteurs, des conducteurs et des machines, permettant d'éviter de trop grandes sollicitations, notamment lors de phases de transport.

La présente invention a pour but de pallier au moins en partie à ces inconvénients. A cet effet elle propose un attelage trois points pour relier une machine à un tracteur, comportant deux bras inférieurs configurés pour être fixés par une fixation rigide en deux points dits inférieurs de la machine, et par une liaison dite inférieure articulée au tracteur, ou encore par une articulation en deux points inférieurs de la machine, et par une liaison dite inférieure rigide au tracteur, et un dispositif supérieur configuré pour relier un troisième point de la machine disposé plus haut que les deux points dits inférieurs, à un point d'un dispositif de levage du tracteur. L'attelage est particulier en ce que ledit dispositif supérieur comprend un amortisseur hydraulique muni d'un vérin, configuré pour limiter les efforts transmis par le dispositif supérieur au tracteur au-delà d'un effort prédéterminé.

Grâce à ces dispositions, on protège la machine, les composants de l'attelage, et le tracteur d'efforts supérieurs à une limite prédéterminée, ce qui permet de prolonger les durées de vie des composants.

### Selon d'autres caractéristiques

- ledit amortisseur hydraulique peut comporter un système d'accumulation hydraulique couplé à au moins une restriction de débit unidirectionnelle, formant un système efficace et fiable de l'invention,
- l'effort prédéterminé peut être réglé supérieur aux efforts appliqués audit troisième point lorsque la machine est en phase de travail, et inférieur au maximum des efforts appliqués audit troisième point possibles en phase de transport, permettant ainsi un travail efficace, sans aucune perturbation, et une possibilité de transport rapide,
- ledit dispositif supérieur peut comporter une bielle de machine comportant un axe de machine, un axe central et un axe de vérin, ladite bielle de machine étant fixée de façon articulée par son axe de machine audit troisième point, et par son axe de vérin audit vérin, ledit dispositif supérieur comportant une bielle de tracteur comportant un axe principal et un axe d'amortissement distants l'un de l'autre, et fixée à un dispositif de levage du tracteur, ladite bielle de tracteur étant fixée de façon articulée par son axe principal audit axe central de la bielle de machine, ledit dispositif supérieur comportant ledit vérin, fixé de façon articulée entre ledit axe de vérin de la bielle de machine et ledit axe d'amortissement de la bielle de tracteur ; de telles dispositions permettent la sélection d'un vérin existant dans le commerce, pour effectuer la fonction complexe mise en œuvre par l'invention,
- ladite bielle de machine peut présenter une forme en V, l'axe central étant disposé à la base du V et les axes de machine et de vérin aux deux points hauts du V, permettant d'optimiser les conditions pour rendre le choix du vérin plus facile,
- l'axe de vérin de la bielle de machine peut être plus éloigné de l'axe central que l'axe de machine, permettant ainsi de réduire la force nécessaire du vérin,
- les deux bras du V peuvent former entre eux un angle supérieur à 90°, libérant ainsi un plus grand espace pour la mise en place du vérin,
- l'axe d'amortissement de la bielle de tracteur peut être disposé plus haut que son axe principal, permettant ainsi un positionnement du vérin sur le dessus de l'attelage, et facilitant ainsi son raccordement et sa maintenance,
- le dispositif supérieur peut être relié au dispositif de levage du tracteur par plusieurs axes, permettant l'attelage de machines plus lourdes.

L'avantage apporté par la présente invention réside principalement en ce qu'elle permet un travail efficace de la machine tout en permettant des transports rapides avec un risque réduit de détérioration de la machine ou du tracteur.

La présente invention sera mieux comprise à la lecture de la description détaillée qui suit faite en référence aux figures annexées dans lesquelles
[Fig.1] est une vue de de côté d'un attelage selon l'invention,
[Fig.2] est une vue schématique d'un système hydraulique mis en œuvre dans l'attelage de la fig. 1.

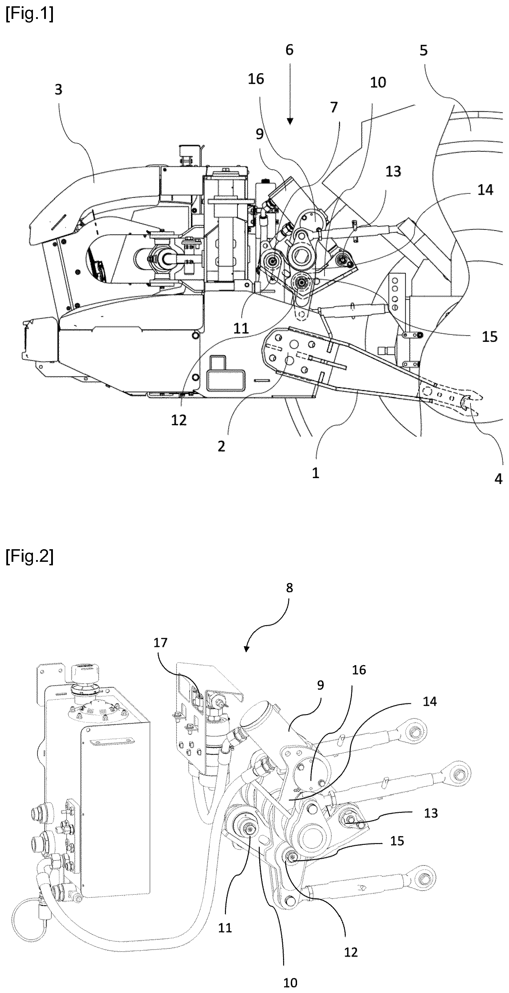

L'attelage selon l'invention représenté à la fig. 1 comporte deux bras inférieurs 1, fixés par une fixation rigide en deux points dits inférieurs 2 de la machine 3, et par une liaison dite inférieure 4 articulée en un point fixe du tracteur 5. On peut aussi prévoir que la fixation rigide aux deux points dits inférieurs 2 de la machine 3 sont remplacés par des articulations, et la liaison dite inférieure 4 est alors rigide.

L'attelage selon l'invention comporte un dispositif supérieur 6 ; celui-ci relie un troisième point 7 de la machine 3, disposé plus haut que les deux points dits inférieurs 2.

Selon l'invention, le dispositif supérieur 6 comporte un amortisseur hydraulique 8 muni d'un vérin 9 et configuré pour limiter les efforts transmis par le dispositif supérieur 6 au tracteur 5 au-delà d'un effort prédéterminé. L'effort prédéterminé peut alors être réglé de sorte que pendant les phases de travail on n'atteint pas cet effort, l'amortisseur hydraulique 8 se comporte alors comme une tige rigide, et le travail de la machine 3 peut se faire de manière satisfaisante.

Si pendant une phase de transport l'effort prédéterminé est dépassé, l'amortisseur hydraulique 8 entre en action et amortit les crêtes d'effort ; il évite ainsi au dispositif supérieur 6de transmettre les crêtes d'effort, ce qui permet de moins solliciter à la fois la machine 3 et le tracteur 5, et donc aussi le conducteur.

Selon un mode préféré de réalisation de l'invention, le dispositif supérieur 6 peut comporter une bielle de machine 10 comportant un axe de machine 11, un axe central 12 et un axe de vérin 13, ladite bielle de machine 10 étant fixée de façon articulée par son axe de machine 11 audit troisième point 7, et par son axe de vérin 13 audit vérin 9.

Selon ce même mode préféré de réalisation de l'invention, ledit dispositif supérieur 6 comporte un palonnier 14 comportant un axe principal 15 et un axe d'amortissement 16 distants l'un de l'autre, et fixée à un dispositif de levage du tracteur 5, ledit palonnier de tracteur 14 étant fixé de façon articulée par son axe principal 15 audit axe central 12 de la bielle de machine 10. Ledit vérin 9 est fixé de façon articulée entre ledit axe de vérin 13 de la bielle de machine 10 et ledit axe d'amortissement 16 du palonnier 14.

Selon un mode particulier de réalisation de l'invention, la bielle de machine 10 présente une forme en V, l'axe central 12 étant disposé à la base du V et les axes de machine 11 et de vérin 13 aux deux points hauts du V. Cette disposition est considérée vérifiée dans le cadre de la présente invention si les trois axes reliés par un trait droit forment un V ; en général la bielle elle-même prend la forme d'un V, mais on peut imaginer que la bielle prend une forme différente, du fait d'ajout d'éléments supplémentaires répondant à d'autres fonctions.

Lorsque les trois axes de la bielle de machine 10 forment un V, cela facilite la disposition d'un vérin 9 entre l'axe de vérin 13 et le palonnier 14, et permet l'utilisation d'une bielle 10, d'un palonnier 14 et de vérins 9 tous plus courts. Cela favorise l'encombrement du dispositif supérieur 6, et permet de réduire son coût.

Selon un autre mode particulier de réalisation de l'invention, l'axe de vérin 13 de la bielle de machine 10 est plus éloigné de l'axe central 12 que l'axe de machine 11 ; ceci permet de mettre en œuvre un vérin 9 de moindre force, et là encore de réduire les coûts et les encombrements.

Selon un autre mode particulier de réalisation de l'invention, les deux bras du V forment entre eux un angle supérieur à 90° ; ceci permet encore davantage de réduire les encombrements.

Selon un autre mode particulier de réalisation de l'invention, le dispositif supérieur 6 est relié au dispositif de levage du tracteur 5 par plusieurs axes, ce qui donne plus de possibilités pour des machines lourdes notamment.

Selon un autre mode de réalisation illustré à la fig. 2, le vérin 9 peut être relié à un ou plusieurs accumulateur(s) hydraulique(s) 17 couplé(s) à au moins une restriction de débit unidirectionnelle 18, permettant le réglage de l'amortisseur hydraulique 8. Lorsque la machine subit une accélération verticale vers le bas, elle est inactive, et elle s'enclenche lorsque la machine remonte. Il se produit une restitution par le système d'accumulateur hydraulique de l'huile emmagasinée lors de la descente ; l'amortisseur dissipe alors une grande partie de l'énergie, et évite un choc vers le haut dû au rebond suite à l'accélération verticale. On peut alors régler l'amortisseur hydraulique 8 de sorte qu'il se comporte comme une tige rigide jusqu'à l'effort prédéterminé et absorbe une partie de l'effort et de l'énergie quand la sollicitation dépasse l'effort prédéterminé. L'effort prédéterminé peut par exemple correspondre à une accélération verticale de 2G.

Selon un autre mode particulier de réalisation de l'invention, l'axe d'amortissement 16 de la bielle de tracteur 14 est disposé plus haut que son axe principal 15 ; ceci permet une meilleure accessibilité pour les raccordements du vérin 9 à l'accumulateur hydraulique 17, et donc facilite le montage de l'attelage et sa maintenance.

L'utilisateur qui doit se rendre sur un chantier, effectue le trajet routier machine repliée, et n'a pas besoin d'opérer un changement quelconque sur l'attelage. Dès qu'il passe sur une bosse entrainant une sollicitation plus importante, l'amortisseur hydraulique 8 selon l'invention entre en fonction, et les efforts appliqués à la machine 3, à l'attelage et au tracteur 5 restent dans des limites acceptables.

Lorsque l'utilisateur arrive sur un chantier, il se met en position, puis abaisse la machine 3, et il est opérationnel pour effectuer le fauchage ou débroussaillage, sans avoir à modifier un quelconque réglage sur l'attelage.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Attelage trois points pour relier une machine (3) à un tracteur (5), comportant deux bras inférieurs (1) configurés pour être fixés par une fixation rigide en deux points dits inférieurs (2) de la machine (3), et par une liaison dite inférieure (4) articulée au tracteur (5), ou encore par une articulation en deux points inférieurs (2) de la machine (3), et par une liaison dite inférieure (4) rigide au tracteur (5), et un dispositif supérieur (6) configuré pour relier un troisième point (7) de la machine (3) disposé plus haut que les deux points dits inférieurs (2), à un point d'un dispositif de levage du tracteur (5), **caractérisé en ce que** ledit dispositif supérieur (6) comprend un amortisseur hydraulique (8) muni d'un vérin (9), configuré pour limiter les efforts transmis par le dispositif supérieur (6) au tracteur (5) au-delà d'un effort prédéterminé.

2. Attelage selon la revendication précédente, dans lequel ledit amortisseur hydraulique (8) comporte un système d'accumulation hydraulique (17) couplé à au moins une restriction de débit unidirectionnelle (18).

3. Attelage selon l'une des revendications précédentes, dans lequel l'effort prédéterminé est réglé supérieur aux efforts appliqués audit troisième point (7) lorsque la machine (3) est en phase de travail, et inférieur au maximum des efforts appliqués audit troisième point (7) possibles en phase de transport.

4. Attelage selon l'une des revendications précédentes, dans lequel ledit dispositif supérieur (6) comporte une bielle de machine (10) comportant un axe de machine (11), un axe central (12) et un axe de vérin (13), ladite bielle de machine (10) étant fixée de façon articulée par son axe de machine (11) audit troisième point (7), et par son axe de vérin (13) audit vérin (9), ledit dispositif supérieur (6)comportant une bielle de tracteur (14) comportant un axe principal (15) et un axe d'amortissement (16) distants l'un de l'autre, et fixée à un dispositif de levage du tracteur (5), ladite bielle de tracteur (14) étant fixée de façon articulée par son axe principal (15) audit axe central (12) de la bielle de machine (10), ledit dispositif supérieur (6) comportant ledit vérin (9), fixé de façon articulée entre ledit axe de vérin (13) et ledit axe d'amortissement (16).

5. Attelage selon la revendication précédente, dans lequel ladite bielle de machine (10) présente une forme en V, l'axe central (12) étant disposé à la base du V et les axes de machine (11) et de vérin (13) aux deux points hauts du V.

6. Attelage selon la revendication précédente, dans lequel l'axe de vérin (13) de la bielle de machine (10) est plus éloigné de l'axe central (12) que l'axe de machine (11).

7. Attelage selon l'une des revendications 5 ou 6, dans lequel les deux bras du V forment entre eux un angle supérieur à 90°.

8. Attelage selon l'une des revendications 5 à 7, dans lequel l'axe d'amortissement (16) de la bielle de tracteur (14) est disposé plus haut que son axe principal (15).

9. Attelage selon l'une des revendications précédentes, dans lequel le dispositif supérieur (6) est relié au dispositif de levage du tracteur (5) par plusieurs axes.
